# EUROPEAN PATENT SPECIFICATION

(11) **EP 2 594 613 B1**
(45) Date of publication and mention of the grant of the patent: **21.09.2016**
(21) Application number: 11807023.4
(22) Date of filing: 12.07.2011
(51) Int. Cl.: C09D 5/24, C09D 133/08, C09D 175/06, C09D 7/12, B05D 3/00, H01B 5/14, C09D 153/00, C09D 201/00

(54) **CONDUCTIVE COATING COMPOSITION AND METHOD FOR MANUFACTURING A CONDUCTIVE LAYER USING SAME**
LEITFÄHIGE BESCHICHTUNGSZUSAMMENSETZUNG UND VERFAHREN ZUR HERSTELLUNG EINER LEITFÄHIGEN SCHICHT DARAUS
COMPOSITION DE REVÊTEMENT CONDUCTEUR ET PROCÉDÉ DE FABRICATION D'UNE COUCHE CONDUCTRICE À L'AIDE DE CELLE-CI

(30) Priority: 12.07.2011 KR 20110068874; 12.07.2010 KR 20100066699
(43) Date of publication of application: 22.05.2013
(73) Proprietor: Hanwha Chemical Corporation, Seoul 100-220 (KR)
(72) Inventor: JEON, Seong Yun, Incheon 406-842 (KR); DO, Seung Hoe, Daejeon 305-768 (KR); LEE, Jin Seo, Daejeon 305-768 (KR); HAN, Joo Hee, Daejeon 305-345 (KR)
(74) Representative: Thoma, Michael
(86) International application number: PCT/KR2011/005109
(87) International publication number: WO 2012/008738

(56) References cited:
- WO-A2-2005/108485
- JP-A- H05 177 123
- JP-A- 2004 124 086
- JP-A- 2007 297 255
- KR-A- 20070 034 469
- KR-A- 20100 045 755
- US-A1- 2011 214 284
- DATABASE WPI Week 200143 Thomson Scientific, London, GB; AN 2001-407888 XP002725751, & WO 01/25292 A1 (DU PONT DE NEMOURS & CO E I) 12 April 2001 (2001-04-12)

## Description

### TECHNICAL FIELD

The present invention relates to a conductive paint composition and a method for manufacturing a conductive film using the same, and more particularly, to a conductive paint composition having uniform and excellent conductivity and preventing conductivity from being deteriorated even though a substrate coated therewith is deformed.

### BACKGROUND

As the integration of electric/electronic parts and semiconductor devices, including various household items, office automation, electric and electronic products and cellular phones has increased, the above-mentioned products and devices are largely damaged due to contamination by dust or particles, static electricity, or electromagnetic waves. Dust, particles, static electricity or electromagnetic waves generated while various kinds of parts used in manufacturing these products assembled, conveyed, transported, and packaged have large effects. In order to reduce this damage, a material having electric conductivity enables materials used in assemblage, conveyance, transport, and package to have an antistatic function, an electrostatic dissipation function, conductivity, and an electromagnetic interference shield function.

In the past, a metal material, such as silver, copper, nickel, indium tin oxide (ITO), antimony tin oxide (ATO), chrome and zinc, was chemically/physically deposited on a substrate, or surfactant, carbon black or carbon fibre, was internally added to or coated on a substrate, or a conductive polymer was coated on the substrate. In addition, a coating liquid employing carbon nanotube has recently been attempted to be manufactured, but fails to be commercialized due to problems, such as price, dispersion, transparency or stability and mass production-related problems.

In the metal deposition method according to the related art, the larger the amount of metal used, the more conductivity is improved, but a long stability characteristic is low and cost burden is large. Furthermore, a metal layer is broken or cracked during a molding procedure after forming a coating film, and thus, the metal layer is difficult to use.

In addition, the surfactant is difficult to realize high electric conductivity and requires a predetermined level of humidity, and thus, the surfactant is easily influenced by seasons and may be transferred to products after a molding procedure. A conductive polymer is made into paint, which is used to form a coating film, in order to overcome these limitations, but this coating film has disadvantages in that effects of electric properties are short, conductivity according to the coated portions is not uniform, and a substrate coated with a coating film has difficulty in realizing conductivity when vacuum molding is performed at a predetermined depth or deeper or when complex shaped products are molded.

Meanwhile, there was an attempt to impart excellent electric conductivity to the electrically conductive thermoplastic resin by using carbon nanotubes as the conductive additive (KR 10 2010 005 8342 A; Korean Patent Registration No. 0706652).

Herein, the carbon nanotubes are subjected to surface treatment by using strong acid or strong base so that the carbon nanotubes are dispersed in water or organic solvent. However, a large amount of wastewater generated during this procedure pollutes the environment, and the carbon nanotubes are damaged during the surface treatment, which fail to realize electric conductivity.

Furthermore, WO 2005/108485 A2 discloses a composite material based on a polymer matrix in which carbon nanotubes are dispersed, wherein a block copolymer is used as compatibilizer, said block copolymer being obtained by radical polymerization. Moreover, WO 01/25292 A1 disposes a pigment dispersant composition comprising an acrylic block copolymer having polar and nonpolar segments, wherein more particularly, a monomer having ionic functions is polymerized on the surface of a CNT to functionalize the CNT with a high molecular weight material, and then another monomer for securing compatibility with a substrate is polymerized on the CNT functionalized with said high molecular weight material.

Furthermore, documents JP 2007/297255 A and JP 2004/124086 A further disclose dispersion products containing carbon nanotubes.

### SUMMARY

An embodiment of the present invention is directed to providing environment-friendly water-based conductive paint composition, provide a conductive paint composition having excellent and uniform conductivity at the time of coating and preventing electric conductivity from being deteriorated even at the time of physical deformation, provide a conductive paint composition having excellent dispersibility, stability, and strength, and provide a conductive paint composition used for antistatic, electrostatic dissipation, electrodes, and electromagnetic interference (EMI) shield and having excellent performances and economical advantages.

Another embodiment of the present invention is directed to providing a conductive film having excellent and uniform conductivity and preventing electric conductivity from being deteriorated even at the time of physical deformation, by using an environment-friendly water-based conductive paint composition according to the present invention, and provide a method for manufacturing the conductive film used for an antistatic film, an electrode, or an EMI shield film.

According to the present invention, the aforementioned objectives underlying the present invention are achieved by a conductive paint composition as defined by claim 1 and a method for manufacturing a conductive film as defined by claim 15. Preferred embodiments of the invention are laid down in the dependent claims.

Hereinafter, a composition and a manufacturing method thereof of the present invention will be described in detail. Meanwhile, unless technical and scientific terms used herein are defined otherwise, they have meanings understood by those skilled in the art to which the present invention pertains. Known functions and components will be omitted so as not to obscure the description of the present invention with unnecessary detail. As used in the specification, the terms "about", "substantially", or the like, which represents a degree, are used as meanings at numerical values or approaching the numerical values when inherent tolerances of preparation and material are presented to the above-mentioned meanings and they are used to prevent unconscientious invaders from unfairly using the contents in which accurate or absolute numerical values are disclosed in order to help the understandings of the present invention, are disclosed.

In one general aspect, a conductive paint composition according to the present invention, includes: a dispersant made of a block copolymer consisting of a hydrophilic polymer unit and a hydrophobic polymer unit; a conductive material made of a surface-modified carbon compound; a polymer binder: and a medium containing water, an organic solvent, or a mixture thereof.

Conductivity may be imparted to the composition by the surface-modified carbon compound, and the carbon compound may be one or more selected from the group consisting of carbon fiber, carbon nanotube, and graphene. Here, the carbon nanotube may be one or more selected from the group consisting of single-walled, double-walled, thin multi-walled, multi-walled, and roped types.

In the present invention, one or more conductive additives selected from metal powder, metal-coated inorganic powder, and metal fiber, besides the carbon compound, may be mixed into the carbon nanotube, thereby being used as a conductive material.

In view of preventing the deterioration in electric conductivity due to physical deformation, the carbon compound contained in the composition may contain carbon nanotube alone, or carbon nanotube and graphene, and the carbon nanotube preferably have a diameter of 0.5 to 100 nm and a length of 0.1 to 1000 *µ*m.

The surface-modified carbon compound of the present invention may include a carbon compound, of which a surface is oxidized by application of acid and/or an oxidant, and a carbon compound, of which a surface is oxidized by reaction with an oxygen source including water under high temperature and high pressure.

Specifically, the surface-modified carbon compound may be obtained by oxidizing a surface of the carbon compound under the condition of subcritical water or supercritical water using one or more oxidants selected from oxygen, air, ozone, hydrogen peroxide and nitro compounds, or obtained by oxidizing a surface of the carbon compound using one or more selected from carboxylic acid, nitric acid, phosphoric acid, sulfuric acid, fluoric acid, hydrochloric acid, hydrogen peroxide, or a mixture thereof.

More specifically, the surface-modified carbon compound obtained by using the condition of subcritical water or supercritical water may be obtained by oxidizing a surface of the carbon compound using an oxidant selected from oxygen, air, ozone, hydrogen peroxide, nitro compounds, and a mixture thereof, under the conditions of a pressure of 5,066 to 40,53 MPa (50 to 400 atm) and a temperature of 100 to 600°C.

Through this, an oxidant, which is not harmful under the condition of subcritical water or supercritical water and easily treated and wastewater-treated, is used to obtain an environment-friendly surface-modified carbon compound, and surface modification in the condition of subcritical water or supercritical water allows the oxidant to be easily introduced, thereby improving the surface modification effect of the carbon compound, and thus, dispersibility can be increased. In addition, a large amount of carbon compound can be continuously modified, thereby mass-producing the surface-modified carbon compound at a low cost in a short time.

The surface modification of the carbon compound using the condition of subcritical water or supercritical water may be performed using techniques, which are described in Korean Patent Application Nos. 10-2008-0029333, 10-2008-0037685, or 10-2008-0050048.

According to another method, the surface-modified carbon compound may be obtained by adding carboxylic acid, nitric acid, phosphoric acid, sulfuric acid, fluoric acid, hydrochloric acid, hydrogen peroxide, or a mixture thereof into the carbon compound to cause an oxidation reaction in a surface of the carbon nanotube, and this introduction of the oxidant can simply provide oxidation for surface modification.

The surface of the carbon compound may be modified such that the surface-modified carbon compound contains 0.01 to 10 parts by weight of oxygen, nitrogen, sulfur, or a mixture thereof based on 100 parts by weight of carbon.

The surface-modified carbon compound may be homogeneously and effectively mixed with a solvent, a dispersant, and a polymer binder according to the present invention, and here, the dispersibility with the polymer binder is remarkably increased to influence uniform conductivity thereof. In addition, even when the conductive material is made of different kinds of carbon compounds, such as graphene and carbon nanotube, mixing between the carbon compounds is much facilitated.

The block copolymer may be a block copolymer consisting of a hydrophilic polymer unit and a hydrophobic polymer unit, and a dispersant for dispersing the carbon compound.

The block copolymer is a compound containing both a hydrophilic polymer and a hydrophobic polymer by polymerization, and obtained by polymerizing the hydrophilic polymer using a hydrophilic monomer, regulating acidity to an alkaline region (pH 6 to 9), and again performing polymerization of the hydrophobic polymer using a hydrophobic monomer while the polymerized hydrophilic polymer is used as a reaction region.

The dispersant made of a block copolymer consisting of the hydrophilic polymer unit and the hydrophobic polymer unit may be prepared by using techniques described in Korean Patent Publication No. 2001-0088773 or 2001-0084640.

The block copolymer consisting of the hydrophilic polymer unit and the hydrophobic polymer unit is characterized by a styrene-acrylic based water-soluble resin. A styrene content of the styrene-acrylic based water soluble resin is preferably 30 to 90 wt%, and a weight average molecular weight of the styrene-acrylic based water soluble resin is preferably 1,000 to 100,000.

The styrene-acrylic based water soluble resin is used as the dispersant together with the above-described surface-modified carbon compound, thereby improving the dispersibility of the carbon compound, forming a very uniform film (coating film) at the time of coating the composition, and manufacturing a film (coating film) having uniform electric conductivity. Here, the coated (and cured) film can be stretched with a high stretch ratio and electric conductivity of the stretched film can be prevented to be changed.

As described above, since the composition according to the present invention contains the styrene-acrylic based water soluble resin as the dispersant together with the surface-modified carbon compound, the composition is coated and cured (or dried) on a surface of a subject having a predetermined use and shape, thereby imparting an antistatic function, an electrostatic dissipation function, conductivity, or an EMI shield function to the object. Here, an original substrate may be molded to manufacture the final product, after the conductive paint composition is coated and cured (dried) on a surface of the original substrate.

Through the above-described advantages, an applicable field of the conductive paint composition according to the present invention is expanding, which is due to a characteristic of the present invention that, although the conductive paint composition is coated on a substrate and then the substrate is molded, electric properties of the coated conductive paint composition are not deteriorated.

For this reason, the conductive paint composition according to the present invention is coated on a substrate selected from an anti-static material, an electrostatic dissipation material, a conductive material, an electromagnetic interference shield material, an electromagnetic interference absorber, a solar cell materials, an electrode material for a dye-sensitized solar cell(DSSC), an electrical component, a cathode active material, an anode active material, and an electrochemical device for a secondary cell, a secondary cell, a fuel cell, a solar cell, a memory device, a hybrid capacitor (P-EDLC), or an electrochemical device as a capacitor, an electronic device, a semiconductor device, a photo-electric device, a notebook part material, a computer part material, a cellular phone part material, PDA part material, a PSP part material, a part material for game machine, housing material, a transparent electrode material, an opaque electrode material, a field emission display (FED) material, a back light unit (BLU) material, a liquid crystal display (LCD) material, a plasma display panel (PDP) material, a light-emitting diode (LED) material, a touch panel material, a signal board material, an advertising board material, a display material, a heating body, a heat irradiator, a plating material, a catalyst, a cocatalyst, an oxidant, a reductant, a car part material, a shipping part material, an air plane part material, a protective tape material, an adhesive material, a tray material, a clean room material, a transport equipment part material, a flame retardant material, an antibacterial material, a metal composite material, a nonferrous metal composite material, a medical machine material, a building material, a flooring material, a wall paper material, a light source part material, a lamp material, an optical equipment parts material, a material for manufacturing fibers, a material for manufacturing clothing, a material for manufacturing electric products, and a material for manufacturing electronic products, to form a film, and then the film is mold processed to produce the final product.

The polymer binder regulates the strength of the film formed at the time of coating the composition, and regulates viscosity of the composition. The polymer binder is a resin solidified or cured by heat or light, and any heat or light curable binder generally used in an antistatic protective film may be used as the polymer binder. Examples of the polymer binder may include one or more selected from the group consisting of urethane, epoxy, melamine, acetal, acrylic, acrylic-styrene-containing emulsion, vinyl acrylic-based emulsion, carbonate, styrene, ester, vinyl, polyphenylene ether resin, acrylonitrile-butadiene-styrene, polysiloxane, a coupling agent containing a metal on the center thereof and organic compound ligands, and a copolymer thereof. The polymer binder is preferably an acrylic-urethane copolymer, which preferably has a weight average molecular weight of 1,000 to 100,000.

As the polymer binder, the emulsion resin prepared by using techniques described in Korean Patent Application No. 10-2000-0009833 or 10-2000-0014086 may be used.

As the medium, a solvent of one or more selected from the group consisting of water, alcohols, ketones, amines, esters, amides, alkyl halides, ethers, furans, sulfur-containing solvents, and a mixture thereof may be used. Specific examples of the medium may be one or more selected from the group consisting of water, methyl alcohol, ethyl alcohol, propyl alcohol, butyl alcohol, isopropyl alcohol, isobutyl alcohol, ethylene glycol, acetone, methylethylketone, cyclohexanone, hexane, diethyl amine, triethyl amine, octadecyl amine, cyclohexane, ethyl acetate, acetone, dimethyl formamide, dimethylacetamide, methylene chloride, chloroform, carbon tetrachloride, dimethyl sulfoxide, dioxin, nitromethane, toluene, xylene, dichlorobenzene, dimethyl benzene, trimethyl benzene, methyl naphthalene, tetrahydrofuran, N-methyl-2-pyrrolidone, pyridine, acrylonitrile, aniline, sorbitol, carbitol, carbitol acetate, methyl cellosolve, and ethyl cellosolve.

More preferably, the medium may be pure water or a water-based solvent in which water and organic solvent are mixed. When the medium contains the organic solvent, the organic solvent may be substantially contained in a content of 0.1 wt% to 5 wt%. The organic solvent contained in the water-based solvent is for forming a homogeneous conductive film, and may be a solvent of one or more selected from the group consisting of alcohols, ketones, amines, esters, amides, alkyl halides, ethers, furans, sulfur-containing solvents, and a mixture thereof. Specific examples of the solvent may be one or more selected from the group consisting of methyl alcohol, ethyl alcohol, propyl alcohol, butyl alcohol, isopropyl alcohol, isobutyl alcohol, ethylene glycol, acetone, methylethylketone, cyclohexanone, hexane, diethyl amine, triethyl amine, octadecyl amine, cyclohexane, ethyl acetate, acetone, dimethyl formamide, dimethylacetamide, methylene chloride, chloroform, carbon tetrachloride, dimethyl sulfoxide, dioxin, nitromethane, toluene, xylene, dichlorobenzene, dimethyl benzene, trimethyl benzene, methyl naphthalene, tetrahydrofuran, N-methyl-2-pyrrolidone, pyridine, acrylonitrile, aniline, sorbitol, carbitol, carbitol acetate, methyl cellosolve, and ethyl cellosolve.

The conductive paint composition may contain 0.1 to 5 wt% of the carbon compound. If the content of the surface-modified carbon compound is below 0.1 wt%, conductivity may be deteriorated at the time of molding. Whereas, if the content of the surface-modified carbon compound is above 5 wt%, physical properties of the film coated with the composition may be deteriorated, and particularly, transparency of the film is considerably deteriorated.

The conductive paint composition may contain 0.05 to 5 wt% of the dispersant. If the content of the dispersant is below 0.05 wt%, carbon nanotubes may not be homogeneously dispersed. Whereas, if the content of the dispersant is above 5 wt%, electric conductivity and hardness of the film may be deteriorated.

The conductive paint composition may contain 5 to 15 wt% of the polymer binder. If the content of the polymer binder is below 5 wt%, an adhesive strength between a substrate and a conductive material may be weakened within the film coated with the conductive paint composition. Whereas, if the content of the polymer binder is above 15 wt%, the film may not be sufficiently cured by heat or light, and electric conductivity thereof may be deteriorated.

The conductive paint composition may contain 75 to 90 wt% of the medium. If the content of the medium is below 75 wt%, the composition may not be coated, while if the content of the medium is above 90 wt%, electric conductivity and strength of the film may be deteriorated.

The conductive paint composition may further comprise an additive of one or more selected from a leveling agent, a wetting agent, a surfactant, a dispersion stabilizer, an anti-settling agent, a pH control agent, a thickener, a slip, a foam, a glue, an adhesive, a thixotropic agent, an antioxidant, a crosslinking agent, an antiskinning agent, an anti-cratering agent, a plasticizer, a drying agent, a flame retardant, a blocking preventer, a corrosion inhibitor, a coupling agent, a floating agent, and a dye, and for example, the conductive paint composition may further contain the leveling agent as the additive.

As the leveling agent, any leveling agent that can be generally used for making a smooth surface may be used in the conductive paint composition. The leveling agent is preferably a siloxane-based leveling agent including polydimethylsiloxane, polyether-modified polydimethylsiloxane, polyether-modified siloxane, and the like.

Here, the conductive paint composition may contain 0.01 to 0.5 wt% of the additive.

According to the conductive paint composition according to the present invention, when a conductive film obtained by coating and curing the above-described conductive paint composition is stretched with a stretch ratio of 1 to 1000 %, sheet resistance of the stretched conductive film is characterized by 1.0x10² to 1.0x10 ¹⁴Ω/□, and preferably characterized by 1.0x10⁷ to 1.0x10⁹ Ω/□.

The conductive paint composition according to the present invention may be used as a paint composition for antistatic, electrostatic dissipation, conductivity, electromagnetic interference (EMI) shield and electrodes.

The above-described conductive paint composition may be prepared by selective mixing of an additive together with the dispersant, the conductive material, the polymer binder, and the medium, and the mixing may be performed by using an apparatus of one or more selected from a mixer, a blade, a fluidizer, a paint shaker, an ultrasonic machine, a homogenizer, a bead mill, a pulverizer, and a roll mill.

In another general aspect, a method for manufacturing a conductive film according to the present invention includes: a) coating the conductive paint composition according to the present invention on at least one surface of a substrate to form a coating film; and b) applying hot air, heat, or UV to the coating film to cure the coating film.

Here, the method may further include, after step b), c) coating the conductive paint composition on a counter surface opposite to one surface of the substrate to form a coating film; and d) applying hot air, heat, or UV to the coating film to cure the coating film.

The conductive film may be formed on one region of a surface of a substrate, for example, on one surface or both surfaces opposite to each other, of the substrate, or the entire surface of the substrate.

As the substrate, one or more selected from the group consisting of polyester, polystyrene, polycarbonate, polyimide, polyvinyl sulfonate, polyacetal, polyacryl, polyvinyl, polyphenylene ether resin, polyolefin, acrylonitrile-butadiene-styrene copolymer, polyarylate, polyamide, polyamideimide, polyarylsulfone, polyetherimide, polyethersulfone, polyphenylene sulfide, fluorines, polyetherketone, polybenzoxazole, polyoxadiazole, polybenzothiazole, polybenzimidazole, polypyridine, polytriazole, polypyrrolidine, polydibenzofuran, polysulfone, polyurea, polyphosphazene, and a liquid crystal polymer, glass, crystal, quartz, glass wafer, silicon wafer, a cathode active material or an anode active material for a secondary cell, a metal plate, a metal oxide plate, ITO deposited glass, PCB, epoxy, a semiconductor chip, a semiconductor packages, and a laminate body thereof may be used. Here, polyester, polystyrene, polyimide, polycarbonate, or polyolefin is preferable as the substrate.

The conductive film has a sheet or film shape, and may be an antistatic film, an electrically conductive film, an electromagnetic interference (EMI) shield film, or an electrode.

The coating may be performed by one method or one or more methods in parallel selected from bar coating, gravure coating, microgravure coating, flexo coating, knife coating, spray coating, slot die coating, roll coating, screen coating, ink jet printing, casting, dip coating, flow coating, curtain coating, comma coating, kiss coating, pad printing, and spin coating, and the coating may be performed by a roll to roll type of gravure coating method.

Here, before the coating is performed, corona treatment or UV ozone treatment is performed on the substrate, and then the conductive paint composition may be coated on a surface of the treatment-completed substrate.

The manufacturing method according to the present invention may further include stretching and molding the substrate having the conductive film formed thereon. In other words, the present invention includes: a) coating the conductive paint composition of any one selected from claims 1 to 14 on at least one surface of a substrate to form a coating film; b) applying hot air, heat, or UV to the coating film to cure the coating film; and e) heating and softening the substrate having the conductive film formed thereon and stretching and molding the substrate at a stretch ratio of 300 to 500%, in a shape of a tray used in transporting or keeping electronic parts.

Due to the characteristic of the conductive paint composition according to the present invention, even though the substrate (and the conductive film) is stretched, and molded in a complex shape, an antistatic function, an electrostatic dissipation function, conductivity, and an electromagnetic interference (EMI) shield function of the conductive film can be maintained and conductivity is uniformly maintained over the molded product, by molding the substrate having the conductive film formed thereon.

The molding is preferably vacuum molding. Specifically, a molded body is manufactured by heating and softening the substrate, on which the conductive film prepared by curing the coating film is formed, treating a gap between a mold and the substrate in a vacuum type, and then performing a stretching process. The molding type of the product is not particularly limited, and the product may be manufactured by a molding process generally used. However, the substrate having the conductive film formed thereon, itself, can be used as the final product without a separate molding procedure.

The molded body obtained by the above molding may be used in an anti-static matter, an electrostatic dissipation matter, a conductive film, an electromagnetic interference shield matter, an electromagnetic interference absorbing matter, a solar cell, an electrode for a dye-sensitized solar cell(DSSC), an electrical component, a cathode active material, an anode active material, and an electrochemical device for a secondary cell, a secondary cell, a fuel cell, a solar cell, a memory device, a hybrid capacitor (P-EDLC), or an electrochemical device as a capacitor, a semiconductor device, a photo-electric device, a notebook part, a computer part, a cellular phone part, a PDA part, a PSP part, a part for game machine, housing, a transparent electrode, an opaque electrode, a field emission display (FED), a back light unit (BLU), a liquid crystal display (LCD), a plasma display panel (PDP), a light-emitting diode (LED), a touch panel, a signal board, an advertising board, a display, a heating body, a heating irradiator, plating, a catalyst, a cocatalyst, an oxidant, a reductant, a car part, a shipping part, an air plane part, a protective tape, an adhesive, a tray, a clean room, a transport equipment part, a flame retardant material, an antibacterial material, a metal composite material, a nonferrous metal composite material, a medical machine, a building material, a flooring material, a wall paper, a light source part, a lamp, an optical equipment, fibers, clothing, fabric for manufacturing clothes, or electric and electronic parts.

### BRIEF DESCRIPTION OF THE DRAWINGS

FIG. 1 is a scanning electron microscopy image of a conductive film manufactured in Example 2; and
FIG. 2 is a scanning electron microscopy image of a conductive film, which is prepared in Example 2, and then vacuum molded.

### DETAILED DESCRIPTION OF EMBODIMENTS

The advantages, features and aspects of the present invention will become apparent from the following description of the embodiments with reference to the accompanying drawings, which is set forth hereinafter. The present invention may, however, be embodied in different forms and should not be construed as limited to the embodiments set forth herein. Rather, these embodiments are provided so that this disclosure will be thorough and complete, and will fully convey the scope of the present invention to those skilled in the art. The terminology used herein is for the purpose of describing particular embodiments only and is not intended to be limiting of example embodiments. As used herein, the singular forms "a," "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

Hereinafter, exemplary embodiments will be described in detail with reference to the accompanying drawings.

### Manufacture example 1

A carbon nanotube (CNT) solution was prepared by mixing 15 g of carbon nanotube (CNT, diameter of about 20nm, length of about 20 *µ*m) and 985 g of distilled water using a circulating pump in a pretreatment bath.

A gas state of oxygen compressed at 250 atm was mixed with the CNT solution at the flow rate of 0.4g/min at the front of a heat exchanger. The CNT solution mixed with oxygen (CNT mixture liquid) was preheated to a temperature of 150 to 200 °C through a heat exchanger, and inputted into a preheater bath through a high-pressure injection pump at a flow rate of 11g/min. The preheated CNT mixture solution was inputted into a surface modification reactor of subcritical water state at 210°C and 24,32 MPa (240atm), and then surface-modified. The surface-modified product was again transferred to the heat exchanger and firstly cooled to 100°C, and then again cooled to a temperature of about 25°C through a cooling apparatus, thereby obtaining 14.3 g of surface-modified CNT.

### Manufacture example 2

The surface-modified CNT was manufactured by the same method as Manufacture example 1 except that air instead of oxygen was used as an oxidant.

### Manufacture example 3

The surface-modified CNT was manufactured by the same method as Manufacture example 1 except that ozone instead of oxygen was used as an oxidant.

### Manufacture example 4

The surface-modified CNT was manufactured by the same method as Manufacture example 1 except that 3.4 g of 50% hydrogen peroxide solution instead of oxygen was added as the oxidant.

### Manufacture example 5

0.2 g of Carbon nanotube (CNT), 600 g of sulfuric acid, and 200 g of nitric acid were mixed, and heated at 60°C for 12 hours. The resulting material was filtered through a filtering apparatus to remove solids, and then washed with pure water, thereby obtaining a surface-modified carbon nanotube.

### Manufacture example 6

The same manufacturing procedure as Manufacture example 1 was performed except that, instead of carbon nanotube (CNT), 11 g of graphene (thickness about 5Å, width about 15nm) was used.

### Manufacture example 7

A CNT dispersion solution was prepared by mixing and dispersing 30 g of the surface-modified CNT prepared by the same method as Manufacture example 1, 75 g of styrene/acrylic-based water soluble resin (Hanwha Chemical Corporation, product number Soluryl 160, weight average molecular weight: 15,000), which is a dispersant, and 895 g of pure water, through a stirring equipment.

### Manufacture example 8

A CNT-graphene dispersion solution was prepared by the same method as Manufacture example 7, except that, instead of 30 g of the surface-modified CNT, 7.5 g of the surface-modified CNT prepared by the same method as Manufacture example 1 and 22.5 g of the surface-modified graphene prepared by the same method as Manufacture example 6 were used.

### Manufacture example 9

A CNT-graphene dispersion solution was prepared by the same method as Manufacture example 7, except that, instead of 30 g of the surface-modified CNT, 7.5 g of the surface-modified CNT prepared by the same method as Manufacture example 1 and 22.5 g of graphene were used.

### Example 1

100 g of the CNT dispersion solution prepared in Manufacture example 7, 100 g of acrylic-urethane copolymer (Air Products, product number Hybridur® 580), which is a polymer binder, and 800 g of pure water were stirred such that they are completely dispersed, in a highspeed stirring machine, to prepare a conductive paint.

The prepared paint was coated on a polyester film to have a thickness (wet thickness) of 5 *µ*m by using a roll to roll type of gravure coating method. The film thus obtained was inputted in a convection oven, of which a temperature of 80°C was maintained, for 1 minute, to remove the solvent, thereby manufacturing a heat cured conductive film (coating film).

### Example 2

The same procedure as Example 1 was performed except that 0.5 wt% of a leveling agent (BYK®346) was added into the paint of Example 1.

### Example 3

The same procedure as Example 1 was performed except that, instead of the CNT dispersion solution, 100 g of the CNT-graphene dispersion solution prepared in Manufacture example 8 was used.

### Example 4

The same procedure as Example 1 was performed except that, instead of the CNT dispersion solution, 100 g of the CNT-graphene dispersion solution prepared in Manufacture example 9 was used.

### Comparative example 1

The same procedures as Manufacture example 6 and Example 1 were performed, except that, instead of the surface-modified carbon nanotube, 30 g of surface-unmodified CNT was used.

### *Test Method*

### 1. Measurement on transparency

A UV/vis spectroscopy by Beckman Company (Model: DU650) was used. A specimen prepared by a manufacturing method of a coating film was used. Transparency was measured based on air as background by the UV/vis spectroscopy. The measurement values at a wavelength of 550 nm are shown in Table 1.

### 2. Measurement on surface hardness

Surface hardness was measured according to ASTM D3363 method by using a pencil scratch hardness tester by the Toyoseiki Company.

### 3. Manufacture of vacuum molding product

The substrates each having the conductive film formed thereon, which were manufactured by Examples and Comparative example, were heated and softened by using electricity or hot air, and then a gap between a mold for molding and each specimen were vacuum-sucked, thereby vacuum-molding the conductive film in a mold shape. Through the above vacuum molding, the substrate and the coating layer were stretched. A stretch ratio (= thickness of the initial substrate / thickness of the molded substrate after molding *100(%)) was calculated in comparison with a thickness of the initial substrate and a thickness of the substrate, which is reduced after vacuum molding.

### 4. Scanning electron microscope (SEM)

The manufactured conductive film was plated with platinum, and then measured by using a scanning electron microscope (Model:S4800, Hitachi Company)

### 5. Measurement on sheet resistance

Sheet resistance was measured according to JISK 7194/ASTM D991 by using Loresta GP (MCP-T600) of Mitsubishi Company.

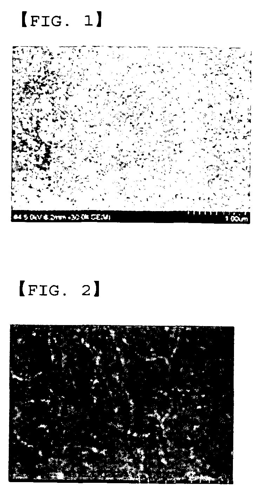

FIG. 1 is a scanning electron microscopy image of a conductive film manufactured in Example 2. As shown in FIG. 1, it can be confirmed that carbon nanotubes are uniformly dispersed on a surface of the substrate and a binder and a leveling agent for paint are strongly bounded with each other between the carbon nanotubes and on the carbon nanotubes.

FIG. 2 is a scanning electron microscopy image of a conductive film after vacuum molding. Even though the conductive film after vacuum molding is stretched with a stretch ratio of 400%, carbon nanotubes are uniformly distributed, thereby exhibiting uniform dispersibility, and strongly bounded with the substrate on an interface therebetween, without delamination.

As shown in FIGS. 1 and 2, it can be seen that the conductive paint composition according to the present invention is an environment-friendly water-based conductive paint composition without using strong acid, strong base, or organic solvent. In addition, the conductive paint composition according to the present invention has very superior dispersibility and high binding strength with the substrate, and cannot be delaminated from the substrate even at a stretch ratio of 400%, and retain excellent electric conductivity.

Table 1 below shows sheet resistance, transparency, surface hardness, and sheet resistance after vacuum molding, of each of the conductive films manufactured in Examples 1 and 2, and Comparative example 1, and in Table 1 below, the stretch ratio at the time of vacuum molding is 400 %. Here, the conductive films manufactured in Examples 3 and 4 also have similar characteristics to the conductive films manufactured in Examples 1 and 2.

**[Table 1]**

| | Sheet resistance of coating film [Ω/□] | Transparency of coating film [%T] | Surface hardness of coating film | Sheet resistance after vacuum molding [Ω/□] |
|---|---|---|---|---|
| Example1 | 10⁵ | 79 | 1H | 10^{7~8} |
| Example2 | 10⁴ | 79 | 1H | 10^{7~8} |
| Comparative example 1 | >10¹² | 97 | 5B | >10¹³ |

As shown in Table 1, it can be seen that the conductive film (coating film) according to the present invention has electric conductivity, which was 7 orders of magnitude higher than that of Comparative example, due to excellent dispersibility of carbon nanotube, and retains excellent electric conductivity even at a physical stretch ratio of 400%.

Further, it can be seen that the composition of the present invention has an excellent adhesive strength to the substrate, which is further improved from 5B to 1H, as compared with Comparative example, and that the leveling effect is improved due to addition of the leveling agent to improve the sheet resistance.

The conductive paint composition according to the present invention is an environment-friendly water-based conductive paint composition without using strong acid, strong base, or organic solvent. In addition, the conductive paint composition according to the present invention can form an excellent and uniform conductive film, enhance an adhesive strength between the coated film and the substrate, retain very superior electric conductivity even though the coated film is physically deformed, impart an antistatic function, an electrostatic dissipation function, conductivity, and an electromagnetic interference shield function to any substrate. Further, according to the present invention, the conductive paint composition can be mass produced at a low cost in a shot time.

## Claims

1. A conductive paint composition, comprising:
a dispersant made of a block copolymer consisting of a hydrophilic polymer unit and a hydrophobic polymer unit;
a conductive material made of a surface-modified carbon compound;
a polymer binder; and
a medium containing water, an organic solvent, or a mixture thereof;
wherein the dispersant is a styrene-acrylic based water soluble resin, and the surface-modified carbon compound is a carbon compound having a surface oxidized by acid or oxidant.

2. The conductive paint composition of claim 1, wherein the carbon compound is one or more selected from the group consisting of carbon fiber, single-walled carbon nanotube, double-walled carbon nanotube, thin multi-walled carbon nanotube, and graphene.

3. The conductive paint composition of claim 1, wherein the polymer binder is acrylic-urethane copolymer.

4. The conductive paint composition of claim 2, wherein the surface-modified carbon compound is a carbon compound having a surface oxidized under a pressure of 5,066 to 40,53 MPa (50 to 400 atm) and at a temperature of 100°C to 600°C using one or more oxidants selected from oxygen, air, ozone, hydrogen peroxide and nitro compounds.

5. The conductive paint composition of claim 2, wherein the surface-modified carbon compound is a carbon compound having a surface oxidized by one or more selected from carboxylic acid, nitric acid, phosphoric acid, sulfuric acid, fluoric acid, hydrochloric acid, hydrogen peroxide or a mixture thereof.

6. The conductive paint composition of claim 1, wherein the surface-modified carbon compound contains 0.01 to 10 parts by weight of oxygen, nitrogen, sulfur, or a mixture thereof based on 100 parts by weight of carbon.

7. The conductive paint composition of claim 1, wherein the carbon compound contains carbon nanotube, graphene, or a mixture thereof, and the carbon nanotube has a diameter of 0.5 to 100 nm and a length of 0.1 to 1000 *µ*m.

8. The conductive paint composition of claim 1, wherein the conductive paint composition contains 0.05 to 5 wt% of the dispersant.

9. The conductive paint composition of claim 1, wherein the conductive paint composition contains 0.1 to 5 wt% of the carbon compound.

10. The conductive paint composition of claim 1, wherein the conductive paint composition contains 5 to 15 wt% of the polymer binder.

11. The conductive paint composition of claim 1, wherein the conductive paint composition contains 75 to 90 wt% of the medium.

12. The conductive paint composition of claim 1, wherein the conductive paint composition further comprises a siloxane-based leveling agent as an additive.

13. The conductive paint composition of claim 12, wherein the conductive paint composition contains 0.01 to 0.5 wt% of the additive.

14. A method for manufacturing a conductive film, comprising:
a) coating the conductive paint composition of any one selected from claims 1 to 13 on at least one surface of a substrate to form a coating film; and
b) applying hot air, heat, or UV to the coating film to cure the coating film.

15. The method of claim 14, further comprising:
after step b),
c) coating the conductive paint composition on a counter surface opposite to one surface of the substrate to form a coating film; and
d) applying hot air, heat, or UV to the coating film to cure the coating film.

16. The method of claim 14, wherein the substrate is polyester, polystyrene, polyimide, polycarbonate, or polyolefin.

17. The method of claim 14', wherein the conductive film is in a sheet or film type, and the conductive film is an antistatic film, an electrically conductive film, an electromagnetic interference (EMI) shield film, or an electrode.

18. The method of claim 14, wherein the coating is performed by one or more coating processes in parallel selected from bar coating, gravure coating, microgravure coating, flexo coating, knife coating, spray coating, slot die coating, roll coating, screen coating, ink jet printing, casting, dip coating, flow coating, curtain coating, comma coating, kiss coating, pad printing, and spin coating.

19. The method of claim 18, wherein the coating is performed by a roll-to-roll type of gravure coating.

20. The method of claim 14, further comprising: heating and softening the substrate having the conductive film formed thereon, and stretching and molding the substrate at a stretch ratio of 300 to 500%, in a shape of a tray used in transporting or keeping electronic parts.

## Patentansprüche

1. Leitfähige Lackzusammensetzung, umfassend:
ein Dispergiermittel aus einem Blockcopolymer, das aus einer hydrophilen Polymereinheit und einer hydrophoben Polymereinheit besteht;
ein leitfähiges Material aus einer oberflächenmodifizierten Kohlenstoffverbindung;
ein Polymerbindemittel; und
ein Medium, das Wasser, ein organisches Lösungsmittel oder eine Mischung davon enthält;
wobei das Dispergiermittel ein wasserlösliches Harz auf Styrol/Acrylat-Basis ist und die oberflächenmodifizierte Kohlenstoffverbindung eine Kohlenstoffverbindung mit einer durch Säure oder ein Oxidationsmittel oxidierten Oberfläche ist.

2. Leitfähige Lackzusammensetzung nach Anspruch 1, wobei die Kohlenstoffverbindung eine oder mehrere ist, die aus der aus Kohlefaser, einwandigem Kohlenstoff-Nanoröhrchen, doppelwandigem Kohlenstoff-Nanoröhrchen, dünnem mehrwandigem Kohlenstoff-Nanoröhrchen und Graphen bestehenden Gruppe ausgewählt ist/sind.

3. Leitfähige Lackzusammensetzung nach Anspruch 1, wobei das Polymerbindemittel ein Acryl-Urethan-Copolymer ist.

4. Leitfähige Lackzusammensetzung nach Anspruch 2, wobei die oberflächenmodifizierte Kohlenstoffverbindung eine Kohlenstoffverbindung mit einer Oberfläche ist, die unter einem Druck von 5,066 bis 40,53 MPa (50 bis 400 atm) und bei einer Temperatur von 100°C bis 600°C unter Verwendung eines oder mehrerer Oxidationsmittel, die aus Sauerstoff, Luft, Ozon, Wasserstoffperoxid und Nitroverbindungen ausgewählt sind, oxidiert wurde.

5. Leitfähige Lackzusammensetzung nach Anspruch 2, wobei die oberflächenmodifizierte Kohlenstoffverbindung eine Kohlenstoffverbindung mit einer Oberfläche ist, die durch eine oder mehrere Substanzen oxidiert wurde, die aus Carbonsäure, Salpetersäure, Phosphorsäure, Schwefelsäure, Fluorsäure, Salzsäure, Wasserstoffperoxid oder einer Mischung davon ausgewählt sind.

6. Leitfähige Lackzusammensetzung nach Anspruch 1, wobei die oberflächenmodifizierte Kohlenstoffverbindung 0,01 bis 10 Gewichtsteile Sauerstoff, Stickstoff, Schwefel oder eine Mischung davon bezogen auf 100 Gewichtsteile Kohlenstoff enthält.

7. Leitfähige Lackzusammensetzung nach Anspruch 1, wobei die Kohlenstoffverbindung Kohlenstoff-Nanoröhrchen, Graphen oder eine Mischung davon enthält, und wobei das Kohlenstoff-Nanoröhrchen einen Durchmesser von 0,5 bis 100 nm und eine Länge von 0,1 bis 1000 µm hat.

8. Leitfähige Lackzusammensetzung nach Anspruch 1, wobei die leitfähige Lackzusammensetzung 0,05 bis 5 Gew.-% des Dispergiermittels enthält.

9. Leitfähige Lackzusammensetzung nach Anspruch 1, wobei die leitfähige Lackzusammensetzung 0,1 bis 5 Gew.-% der Kohlenstoffverbindung enthält.

10. Leitfähige Lackzusammensetzung nach Anspruch 1, wobei die leitfähige Lackzusammensetzung 5 bis 15 Gew.-% des Polymerbindemittels enthält.

11. Leitfähige Lackzusammensetzung nach Anspruch 1, wobei die leitfähige Lackzusammensetzung 75 bis 90 Gew.-% des Mediums enthält.

12. Leitfähige Lackzusammensetzung nach Anspruch 1, wobei die leitfähige Lackzusammensetzung ferner ein siloxanbasiertes Egalisiermittel als Zusatzstoff umfasst.

13. Leitfähige Lackzusammensetzung nach Anspruch 12, wobei die leitfähige Lackzusammensetzung 0,01 bis 0,5 Gew.-% des Zusatzstoffes enthält.

14. Verfahren zur Herstellung eines leitfähigen Films, umfassend die folgenden Schritte:
a) Auftragen der leitfähigen Lackzusammensetzung nach einem der Ansprüche 1 bis 13 auf mindestens eine Oberfläche eines Substrats, um einen Beschichtungsfilm zu bilden; und
b) Aufbringen von Heißluft, Hitze oder UV auf den Beschichtungsfilm, um den Beschichtungsfilm zu härten.

15. Verfahren nach Anspruch 14, ferner umfassend die folgenden Schritte:
nach Schritt b),
c) Auftragen der leitfähigen Lackzusammensetzung auf eine Gegenfläche gegenüber einer Oberfläche des Substrats, um einen Beschichtungsfilm zu bilden; und
d) Aufbringen von Heißluft, Hitze oder UV auf den Beschichtungsfilm, um den Beschichtungsfilm zu härten.

16. Verfahren nach Anspruch 14, wobei das Substrat Polyester, Polystyrol, Polyimid, Polycarbonat oder Polyolefin ist.

17. Verfahren nach Anspruch 14, wobei der leitfähige Film als Folie oder Film vorliegt und der leitfähige Film ein antistatischer Film, ein elektrisch leitender Film, ein elektromagnetische Interferenz (EMI) abschirmender Film oder eine Elektrode ist.

18. Verfahren nach Anspruch 14, wobei das Beschichten durch einen oder mehrere Beschichtungsvorgänge parallel erfolgt, die ausgewählt sind aus Stabbeschichten, Gravurbeschichten, Mikrogravurbeschichten, Flexobeschichten, Rakelbeschichten, Sprühbeschichten, Schlitzdüsenbeschichten, Walzbeschichten, Rasterbeschichten, Tintenstrahldrucken, Gießen, Tauchbeschichten, Flutbeschichten, Vorhangbeschichten, Kommabeschichten, Kiss-Beschichten, Tampondrucken und Schleuderbeschichten.

19. Verfahren nach Anspruch 18, wobei das Beschichten durch ein Walze-zu-Walze-Gravurbeschichten erfolgt.

20. Verfahren nach Anspruch 14, ferner umfassend die folgenden Schritte: Erhitzen und Erweichen des Substrats mit dem darauf ausgebildeten leitfähigen Film sowie Strecken und Formen des Substrats mit einem Streckverhältnis von 300 bis 500% zur Form einer Schale wie sie bei Transport oder Lagerung von Elektronikteilen verwendet wird.

## Revendications

1. Composition de peinture conductrice, comprenant :
un dispersant fait d'un copolymère à blocs constitué d'une unité polymère hydrophile et d'une unité polymère hydrophobe ;
un matériau conducteur fait d'un composé de carbone modifié en surface ;
un liant polymère ; et
un milieu contenant de l'eau, un solvant organique ou un mélange de ceux-ci ;
le dispersant étant une résine soluble dans l'eau à base de styrène-acrylique, et le composé de carbone modifié en surface étant un composé de carbone ayant une surface oxydée par un acide ou un oxydant.

2. Composition de peinture conductrice selon la revendication 1, dans laquelle le composé de carbone est un ou plusieurs choisis dans le groupe constitué par fibre de carbone, nanotube de carbone à paroi unique, nanotube de carbone à double paroi, petit nanotube de carbone à parois multiples, et graphène.

3. Composition de peinture conductrice selon la revendication 1, dans laquelle le liant polymère est un copolymère acrylique-uréthane.

4. Composition de peinture conductrice selon la revendication 2, dans laquelle le composé de carbone modifié en surface est un composé de carbone ayant une surface oxydée sous une pression de 5,066 à 40,53 MPa (50 à 400 atm) et à une température de 100°C à 600°C utilisant un ou plusieurs oxydants choisis parmi oxygène, air, ozone, peroxyde d'hydrogène et composés nitrés.

5. Composition de peinture conductrice selon la revendication 2, dans laquelle le composé de carbone modifié en surface est un composé de carbone ayant une surface oxydée par un ou plusieurs choisis parmi acide carboxylique, acide nitrique, acide phosphorique, acide sulfurique, acide fluorique, acide chlorhydrique, peroxyde d'hydrogène ou un mélange de ceux-ci.

6. Composition de peinture conductrice selon la revendication 1, dans laquelle le composé de carbone modifié en surface contient 0,01 à 10 parties en poids d'oxygène, d'azote, de soufre ou d'un mélange de ceux-ci basées sur 100 parties en poids de carbone.

7. Composition de peinture conductrice selon la revendication 1, dans laquelle le composé de carbone contient nanotube de carbone, graphène ou un mélange de ceux-ci, et le nanotube de carbone possède un diamètre de 0,5 à 100 nm et une longeur de 0,1 à 1000 µm.

8. Composition de peinture conductrice selon la revendication 1, dans laquelle la composition de peinture conductrice contient 0,05 à 5 % en poids du dispersant.

9. Composition de peinture conductrice selon la revendication 1, dans laquelle la composition de peinture conductrice contient 0,1 à 5 % en poids du composé de carbone.

10. Composition de peinture conductrice selon la revendication 1, dans laquelle la composition de peinture conductrice contient 5 à 15 % en poids du liant polymère.

11. Composition de peinture conductrice selon la revendication 1, dans laquelle la composition de peinture conductrice contient 75 à 90 % en poids du milieu.

12. Composition de peinture conductrice selon la revendication 1, dans laquelle la composition de peinture conductrice comprend en outre un agent nivelant à base de siloxane comme additif.

13. Composition de peinture conductrice selon la revendication 12, dans laquelle la composition de peinture conductrice contient 0,01 à 0,5 % en poids de l'additif.

14. Procédé de fabrication d'un film conducteur, comprenant :
a) appliquer la composition de peinture conductrice selon l'une quelconque des revendications 1 à 13 sur au moins une surface d'un substrat pour former un film de revêtement ; et
b) appliquer de l'air chaud, de la chaleur ou de l'UV sur le film de revêtement pour durcir le film de revêtement.

15. Procédé selon la revendication 14, comprenant en outre :
après l'étape b),
c) appliquer la composition de peinture conductrice sur une contre-surface opposée à une surface du substrat pour former un film de revêtement ; et
d) appliquer de l'air chaud, de la chaleur ou de l'UV sur le film de revêtement pour durcir le film de revêtement.

16. Procédé selon la revendication 14, dans lequel le substrat est polyester, polystyrène, polyimide, polycarbonate ou polyoléfine.

17. Procédé selon la revendication 14, dans lequel le film conducteur est prévu sous forme de feuille ou film et le film conducteur est un film antistatique, un film électroconducteur, un film de protection contre les interférences électromagnétiques ou une électrode.

18. Procédé selon la revendication 14, dans lequel le revêtement est effectué par un ou plusieurs procédés de revêtement en parallèle choisis parmi revêtement à la tige, revêtement par gravure, revêtement par microgravure, revêtement par flexographie, revêtement au couteau, revêtement par pulvérisation, revêtement par filière à fente, revêtement au rouleau, revêtement par tamisage, impression jet d'encre, coulage, revêtement au trempé, revêtement par aspersion, revêtement par voile, revêtement par virgule, revêtement par effleurement, impression par tampon et revêtement par centrifugation.

19. Procédé selon la revendication 18, dans lequel le revêtement est effectué par un type de revêtement par gravure rouleau à rouleau.

20. Procédé selon la revendication 14, comprenant en outre : chauffer et ramollir le substrat sur lequel le film conducteur est formé, et étirer et mouler le substrat à un rapport d'étirage de 300 à 500 % dans la forme d'une coupe utilisée dans le transport ou stockage de pièces électroniques.
